# EUROPEAN PATENT SPECIFICATION

(11) **EP 2 087 711 B1**
(45) Date of publication and mention of the grant of the patent: **29.12.2010**
(21) Application number: 06807699.1
(22) Date of filing: 31.10.2006
(51) Int. Cl.: H04L 29/12

(54) **Methods and node for IP network interfacing**
Verfahren und Vorrichtung zum IP-Netzwerk-Interfacing
Procédés et appareil pour une interface de réseau IP

(43) Date of publication of application: 12.08.2009
(73) Proprietor: Telefonaktiebolaget LM Ericsson (publ), 164 83 Stockholm (SE)
(72) Inventor: IOVANNA, Paola, 00046 Rome (IT); PORFIRI, Claudio, 00030 San Cesareo (RM) (IT); VELLANTE, Laura, 00174 Rome (IT); PROPERZI, Umberto, 00185 Rome (IT)
(74) Representative: Tonscheidt, Andreas
(86) International application number: PCT/EP2006/067994
(87) International publication number: WO 2008/052597

(56) References cited:
- US-A1- 2006 133 343
- US-A1- 2006 215 654
- XIE MOTOROLA R STEWART CISCO SYSTEMS Q ET AL: "SCTP NAT Traversal Considerations" IETF STANDARD-WORKING-DRAFT, INTERNET ENGINEERING TASK FORCE, IETF, CH, no. 1, 22 October 2005 (2005-10-22), XP015043141 ISSN: 0000-0004
- STEWART CISCO SYSTEMS R ET AL: "Stream Control Transmission Protocol (SCTP) Network Address Translation" IETF STANDARD-WORKING-DRAFT, INTERNET ENGINEERING TASK FORCE, IETF, CH, no. 2, 30 May 2006 (2006-05-30), XP015047277 ISSN: 0000-0004

## Description

### Technical Field

The present invention relates to a method and apparatus for interfacing IP networks which have different IP address spaces. The invention is applicable in particular, though not necessarily, to providing a Network Address Translation interface for nodes utilising the Stream Control Transmission Protocol.

### Background

Operators of telecommunication networks have begun switching their networks from a traditional circuit switched functionality to an IP functionality. The later has the advantage of increased network capacity and reduced infrastructure costs, due in part to the interoperability which IP permits. In an IP signalling network (which to some extent is a virtual network sharing transport resources with the user plane network), network entities have traditionally been allocated a unique IP address within the operator domain. In order to allow these entities to communicate with entities within the domains of other operators, the Network Address Translation (NAT) protocol may be implemented at interfaces between the domains. The use of NAT allows an operator to dynamically change entities and their IP addresses within its domain without affecting the addressing processes within other domains.

Entities can be clustered together to form a single node, with each entity of the cluster being addressable using its own "private" IP address within the home domain but with all of the entities being addressable using a single "public" IP address or sharing a pool of public addresses. The NAT interface is then responsible for routing packets addressed to the common IP address or pool IP addresses onward to the correct entities.

The Transport Control Protocol (TCP) is the layer 4 protocol generally employed within IP-based telecommunication networks to both guarantee end-to-end packet delivery and to handle routing of received IP packets to higher layers (i.e. applications). TCP would therefore be implemented at each network entity within a node (comprising a cluster of entities). For a given application (identified by a port number), TCP provides for the delivery of a byte-stream, each byte of which has a sequence number. At a receiving node, the TCP layer passes the bytes in order to the appropriate application. TCP does not have the ability to identify individual message streams within a byte stream.

The handling of individual message streams is desirable for a number of reasons. For example, to avoid the loss of a message in one message stream relating to one matter from impacting on other message streams relating to other matters. To this end, the Internet Engineering Task Force (IETF) has specified a protocol known as the Stream Control Transmission Protocol (SCTP) which provides an alternative to TCP. SCTP provides for the establishment of SCTP "associations" between peer SCTP entities. An association is defined by the IP address/port number pairs of both ends and by a pair of Verification Tags (one allocated by each SCTP peer). An SCTP packet comprises two parts, a common header and a data chunk. The header contains the Verification Tag allocated by the sender, which provides an association identifier. The SCTP message initiating a new association contains a zero value in the Verification Tag field, whilst the data chunk is a specific chunk called an "INIT" (or initiation) chunk which contains an Initiate Tag which holds the value of the Verification Tag to be used in subsequent messages belonging to the same association. In addition, message streams within the same association are distinguished by a Stream ID which is included in the header of each DATA chunk (the first message in a given stream contains the Stream ID that will be used for the stream). The sender of an SCTP message includes a Adler-32 checksum in the message header, taken across the entire contents of the SCTP message, in order to provide additional protection against data corruption in the network.

In addition to facilitating multiple streams within the same session, SCTP provides for so-called multi-homing. Multi-homing refers to an ability to identify a single node (or node entity) by more than one IP address. An INIT chunk of an association initiating SCTP message contains the IPv4 and/or IPv6 addresses that the sending node has available to it, whilst an INIT ACK chunk of the response message contains the IPv4 and/or IPv6 addresses that the peer node has available to it.

IETF RFC 3257 [Stream Control Transmission Protocol Applicability Statement] considers the scenario when single homed sessions are to be used, and one of the peer entities is located behind a NAT. It proposes that no transport (IP) addresses should be sent in the INIT or INIT ACK chunk. This will force the endpoint that receives this initiation message to use the source address in the IP header as the only destination address for this association. This source address will be the public IP address allocated to the initiating entity by the NAT. The IP address(es) may be omitted by the sending SCTP entity or, if the NAT is made SCTP aware, the NAT can modify the SCTP chunk appropriately. However, in this latter case, it is necessary for the NAT compute a new 32 bit checksum. A further, significant disadvantage of both approaches is that the procedure precludes the use of multihoming by an entity behind the NAT as by definition multi-homing requires that multiple IP addresses be included in the SCTP INIT or INIT ACK chunks.

If multihoming is required, the NAT must have a public IP address for each represented internal IP address. A multi-entity node behind the NAT can preconfigure the NAT with IP addresses that the NAT can substitute into INIT and INIT ACK chunks. Alternatively, the NAT can have an internal Application Layer Gateway (ALG) which will intelligently translate the IP addresses in the INIT and INIT ACK chunks without the node having to first configure the NAT. Document US2006/0133343 discloses an example hereof. In both cases, where entities behind the NAT share one or more common public IP addresses (as will typically be the case), some appropriate port number mapping must be applied by the NAT on a per association basis to ensure that an SCTP endpoint continues to receive the same port number for all messages within a given association. Again however, these approaches require the NAT to modify, in some cases, the SCTP message and thus to re-calculate the 32 bit checksum, and to manage a large number of ports.

### Summary

The invention is defined by the subject matter of the independent claims. According to a first aspect of the present invention there is provided a method of operating a private network within a telecommunications system, the network comprising a plurality of entities each arranged to send and receive IP packets to peer entities, via a Network Address Translation function, using a layer 4 control protocol which facilitates multi-homing by allowing an entity to include more than one IP address in a layer 4 packet chunk, the method comprising:
maintaining at each of said plurality of entities a table mapping one or more private addresses of the entity to one or more public addresses of the Network Address Translation function;
for each association initiation message generated by an entity, the entity including in said layer 4 packet chunk of the message the public IP address(es) of the Network Address Translation function obtained from said table for the corresponding private IP address(es).

In a typical implementation, said plurality of entities is contained within a single physical node. The Network Address Translation function is attached to the private network and may also be within the same physical node.

In a preferred embodiment of the invention, said layer 4 control protocol is the Stream Control Transmission Protocol and said association initiation messages are Stream Control Transmission Protocol containing an INIT or INIT ACK chunk.

Preferably, said Network Address Translation function is implemented at a Network Address Translation entity within said node, and said Network Address Translation function does not change the layer 4 packet. A Network Address Translation bindings table is maintained at the Network Address Translation entity for each of said plurality of entities, each table mapping the or each private address of an entity to a public address of the Network Address Translation function and a range of association identification tags. In the case of SCTP, these association tags are Verification Tags.

Preferably, for each outgoing IP packet at the Network Address Translation entity, the private address contained in the source address field of the IP packet header is mapped to a public IP address using the corresponding bindings table, and the private IP address substituted for the public IP address. For incoming IP packets at the Network Address Translation entity, the public IP address contained in the destination field of the IP packet header and an association identification tag contained in the layer 4 header are mapped to a private IP address using the corresponding bindings table, and the public IP address substituted for the private IP address.

Preferably, each of said plurality of entities is allocated a plurality of private IP addresses that are unique within a local domain of the node, and said public IP addresses are shared between the addresses as a pool.

Other aspects of the present invention relate to a node for use in a telecommunications network, a method of configuring a node of a telecommunications system, a method of configuring a Network Address Translation entity, a method of operating a Network Address Translation entity, and a method of operating a private network within a telecommunications system, and are defined in the appended claims.

### Brief Description of the Drawings

Figure 1 illustrates schematically a node within a telecommunications network and which employs Network Address Translation;
Figure 2 illustrates signalling sent from an SCTP element to a NAT device during a configuration phase;
Figure 3 illustrates signalling sent from a NAT device to an SCTP element during a configuration phase;
Figure 4 illustrates schematically the handling of outgoing packets at the node of Figure 1; and
Figure 5 illustrates schematically the handling of incoming packets at the node of Figure 1.

### Detailed Description

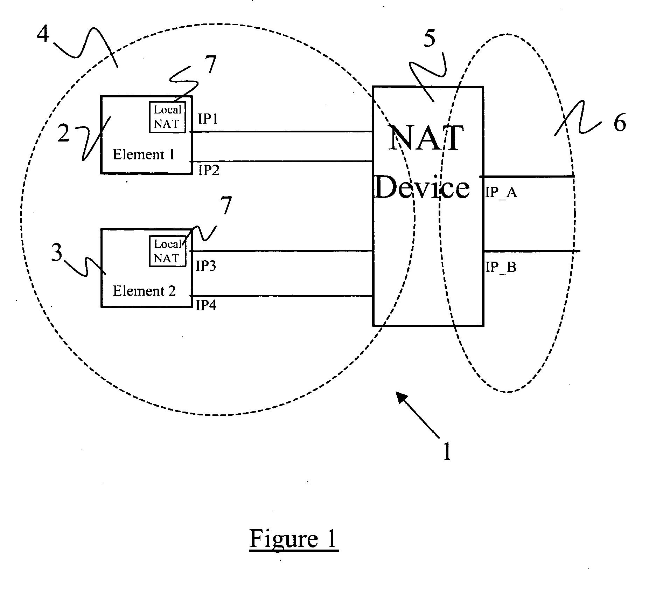

There is illustrated in Figure 1 a node 1 which might exist within a telecommunications network. Typically, all components of the node are co-located, and indeed might be provided by a number of boards within a single rack structure. The node comprises, in this example, a pair of elements, element I and element 2 denoted by reference numerals 2 and 3 respectively, which are located within a local or private network 4 having a first IP address space. Both elements are SCTP capable and make use of multi-homing. Each element is allocated two unique addresses within this space, namely IP1 and IP2 for element 1, and IP3 and IP4 for element 2.

The node 1 also comprises a NAT device 5 which has an interface to the private network 4 identified by one or more further unique IP address within the private network address space. The NAT device is coupled to a public IP network 6 (public in the sense that it is accessible by other private networks, but not necessarily accessible by anyone) and has two unique IP addresses within the address space of the public network, namely IP_A and IP_B. The NAT device 5 is essentially conventional, and for outgoing SCTP packets received from one of the elements it substitutes the private network IP address contained in the IP header for one of the public IP addresses. For incoming packets, the NAT device performs the reverse substitution using a mapping function as will be described below. The NAT device provides for the hiding of private network addresses in the usual way.

Each element 2, 3 is provided with a new functional entity referred to here as a Local NAT 7. The role of the Local NAT 7 is to perform a substitution of private IP addresses for public IP addresses at the SCTP layer, while leaving IP addresses at the IP layer unchanged. The Local NAT allows for the handling of end-to-end SCTP associations among the corresponding remote elements without impact on standard SCTP, and with only limited impact on the NAT device 5.

Prior to use, it is necessary to configure both the Local NATs 7 and the NAT device 5 with IP address mappings. The configuration phase comprises two stages: in a first stage, a range of (Verification) Tag values is defined for and assigned to each element 2, 3, whilst in a second stage, tables storing the mapping information between private and public addresses are configured within the NAT device 5 and Local NATs 7.

Considering further stage one, each element 2, 3 is assigned a range of Verification Tag values. The range is different for each element and there is no overlap between them. The assignment of the range can be performed in different ways: for example, it is possible to assign to the elements contiguous ranges of equal size, or to use an algorithm that assigns a larger range to the elements having the greatest processing capacity, and so on.

Stage two of the configuration phase consists of an exchange of messages between each element 2, 3 and the NAT device 5. Only a very simple exchange of messages is required. It will be appreciated that such an exchange can be carried out using TCP and there is no need, at this stage, to establish an SCTP association between the elements and the NAT for this purpose. An element initiates the exchange by communicating to the NAT device its private IP addresses and the Verification Tag range assigned to the element. The NAT device 5 then maps the private IP addresses of the element 2, 3 to a public IP address or addresses and stores this mapping and the tag range in its own mapping table. The NAT device then sends the mapping information to the element. The element in its turn stores the mapping information into a mapping table of its local NAT.

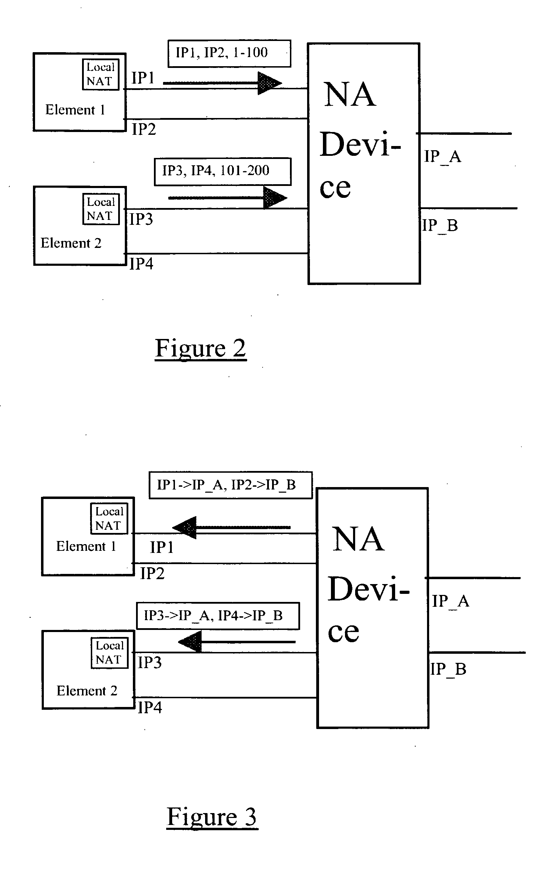

After this configuration phase has been completed for each element behind the NAT device 5, all elements and the NAT device have their own mapping tables configured. Figures 2 and 3 illustrate the exchange of signalling between an SCTP element and the NAT device during the configuration phase, whilst Tables 1 to 3 below illustrate possible mapping tables created at the NAT device, and first and second elements respectively.

When initiating an SCTP association, an element must prepare an SCTP message containing an INIT or INIT ACK chunk. Considering one of the elements 1 and 2 shown in the Figures, when preparing the INIT or INIT ACK chunk the element will substitute its private network addresses for the respective public network addresses using the previously generated local mapping table. This operation is performed by the Local NAT. The element then generates the 32 bit checksum across the modified massage and includes this in the SCTP message header.

The NAT device 5 processes SCTP packets sent towards the public network 6 differently from the SCTP packets received from the public network. However, this processing is relatively simple and consists of the translation of IP addresses at the IP level.

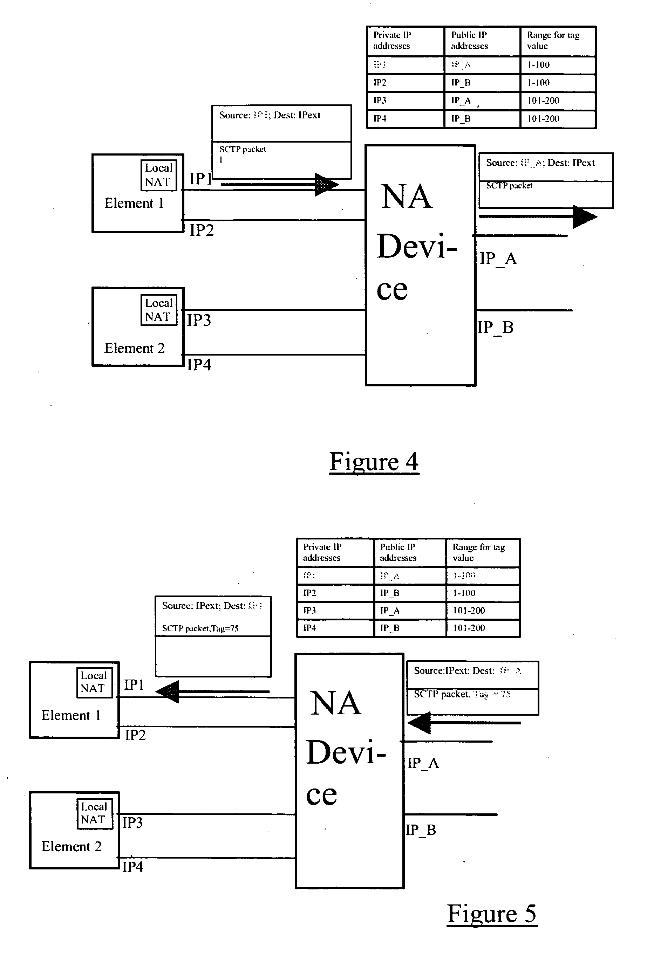

When an SCTP packet sent towards the external network crosses the NAT device, the NAT device performs the following operations for all SCTP packets, also illustrated in Figure 4:
It gets the source private IP address from the IP header of the packet.
It executes a lookup operation in its mapping table, using the private IP address as search key. The result of the lookup operation is the public IP address to which the private IP address has been mapped during the configuration phase.
It constructs an IP header using as source IP address the public address resulting from the look-up operation and it sends the packet towards the public network, without changing any field in the SCTP packet.
[NB. there is no port translation, see for example IETF RFC 3257.]

In the case of an initiation message, the peer SCTP element receiving the message will detect the presence of the two public IP addresses in the INIT or INIT ACK chunk. It will use one of these as the primary delivery address for the initiating element, whilst retaining the second public IP address in case this is required (e.g. due to a subsequent link failure).

Considering now SCTP packets arriving at the NAT device 5 from the public network 6 and which are addressed to the private network elements (and which relate to an already established SCTP association), the operation uses the destination IP address in the IP header and the Verification Tag value carried in the SCTP header. In particular, the NAT device:
Obtains the destination IP address from the IP header and obtains the Verification Tag value from the SCTP header.
Uses this data as search keys to perform a lookup operation in its mapping table, the result being the private IP address of the element that the packet is addressed to.
Creates a new IP header containing the determined private address as destination address and sends the packet over the private network.

This procedure is illustrated in Figure 5.

This operation is performed for every SCTP packet coming from the public network, with the exception of SCTP packets carrying an INIT chunk. As already described above, SCTP packets carrying an INIT chunk have the Verification Tag value in the SCTP header set to zero. The NAT is not able to perform any mapping for such a packet as there is no correspondence in the NAT table for such a Verification Tag value. Therefore, when the Verification Tag value is zero, the NAT will choose an element to which to allocate the message according to some decision algorithm. For example, the NAT decision algorithm may select an internal element based upon current loads. If two or more elements satisfy the load requirements, the element with the lower number of association in charge is chosen. If two or more elements satisfy this criterion as well, an element may be randomly selected from the candidate elements.

It will be appreciated that, as the NAT device does not need to change any data within the SCTP packet, the solution presented here places a minimal processing burden on the NAT device. In particular, there is no need to compute the 32-bit checksum required by SCTP, within the NAT device. This is instead calculated by the SCTP element 2,3.

Within an SCTP element, the Local NAT plays a fundamental role in supporting multi-homed associations as facilitated by SCTP and in reducing the processing load placed on the NAT device. In particular, the Local NAT is responsible for including, in an INIT or INIT ACK chunk, the public IP addresses corresponding to the private, multi-homing addresses of the SCTP entity, in place of the private addresses.

The proposed solution introduces a high degree of robustness with respect to link failure into the private network, in the case of both single and multi-homed associations. If a link failure happens inside the private network and an element or a NAT IP address is not reachable from the public network, the system can continue operating normally. There are two cases to consider here.

Firstly, for SCTP packets sent towards the public network, the SCTP capable element (within the private network) itself perceives the link failure and sends packets from an alternative private IP address in use for the current association. As the NAT is already configured for both (or all) private addresses, it is transparent to link failure for SCTP packets going towards the public network.

Secondly, for the case of SCTP packets coming from the public network, two scenarios can be envisaged. In the first scenario, management of link failure is the sole responsibility of the SCTP mechanism. If an SCTP packet coming from the public network is addressed to a private IP addresses which is not reachable due to a link failure, the NAT drops the packet, and the external element, via SCTP retransmission mechanisms, changes the destination IP address and resends the packet. In the second scenario, management of link failure is assigned to the NAT. If a private IP address is not reachable, the NAT forwards an incoming SCTP packet addressed to the unreachable destination towards another eligible IP address of the same destination element.

This solution presented here is scalable with respect to the number of SCTP capable elements within the private network as there is no limit to the number of elements that can be behind the NAT device. When a new element is added, the configuration phase is performed without impacting on the configuration of other elements or their ongoing associations.

Any NAT implementation designed to facilitate peer-to-peer SCTP exchanges should be compliant with the appropriate standards, in this case IETF RFC 2960. As far as the INIT and INIT ACK packets are concerned, compliance is the primary focus of this discussion. In the case of packets containing other chunks, it is considered that the RFC requirements are also met by the mechanisms proposed here. In particular, considering an ABORT chunk that contains the Verification Tag of the sender and not the receiver, the NAT will not recognise the correct recipient and will either reject the message or forward it to the wrong recipient. In either case, the result will be an effective failure, i.e. the intended result. The proposal is also compliant with the SHUTDOWN COMPLETE, COOKIE ECHO, and SHUTDOWN ACK message requirements.

It will be appreciated by the person of skill in the art that various modifications may be made to the above described embodiments without departing from the scope of the present invention. For example, whilst the mechanism discussed above requires no port translation at the NAT device, port translation can be permitted at the NAT.

**Table 1. Mapping Table of NAT device**

| Private IP addresses | Public IP addresses | Range for tag value |
|---|---|---|
| IP1 | IP_A | 1-100 |
| IP2 | IP_B | 1-100 |
| IP3 | IP_A | 101-200 |
| IP4 | IP_B | 101-200 |

**Table 2. Mapping table of element 1**

| Private IP addresses | Public IP addresses | Range for tag value |
|---|---|---|
| IP1 | IP_A | 1-100 |
| IP2 | IP_B | 1-100 |

**Table 3. Mapping table of element 2**

| Private IP addresses | Public IP addresses | Range for tag value |
|---|---|---|
| IP3 | IP_A | 101-200 |
| IP4 | IP_B | 101-200 |

## Claims

1. A method of operating a private network within a telecommunications system, the network comprising a plurality of entities each arranged to send and receive IP packets to peer entities, via a Network Address Translation function, using a layer 4 control protocol which facilitates multi-homing by allowing an entity to include more than one IP address in a layer 4 packet chunk, the method comprising:
maintaining at each of said plurality of entities a table mapping one or more private addresses of the entity to one or more public addresses of the Network Address Translation function;
for each association initiation message generated by an entity, the entity including in said layer 4 packet chunk of the message the public IP address or public IP addresses of the Network Address Translation function obtained from said table for the corresponding private IP address or private IP addresses.

2. A method according to claim 1, wherein said layer 4 control protocol is the Stream Control Transmission Protocol.

3. A method according to claim 2, wherein said association initiation messages are Stream Control Transmission Protocol messages containing an INIT or INIT ACK chunk.

4. A method according to any one of claims 1 to 3, wherein said plurality of entities are contained within the same physical node.

5. A method according to claim 4 and comprising implementing said Network Address Translation function at a Network Address Translation entity within said node.

6. A method according to claim 5, where said Network Address Translation function does not change the layer 4 packet.

7. A method according to claim 5 or 6 and comprising maintaining a Network Address Translation bindings table at the Network Address Translation entity for each of said plurality of entities, each table mapping the or each private address of an entity to a public address of the Network Address Translation function and a range of association identification tags.

8. A method according to claim 7 when appended to claim 2, said association identification tags being Verification Tags.

9. A method according to claim 7 or 8 and comprising, for each outgoing IP packet at the Network Address Translation entity, mapping the private address contained in the source address field of the IP packet header to a public IP address using the corresponding bindings table, and substituting the private IP address for the public IP address.

10. A method according to any one of claims 7 to 9 and comprising, for incoming IP packets at the Network Address Translation entity, mapping the public IP address contained in the destination field of the IP packet header and an association identification tag contained in the layer 4 header to a private IP address using the corresponding bindings table, and substituting the public IP address for the private IP address.

11. A method according to any one of the preceding claims, wherein each of said plurality of entities is allocated a plurality of private IP addresses that are unique within a local domain of the node, and said public IP addresses are shared between the addresses as a pool.

12. A node for use in a telecommunications network, the node comprising:
a plurality of entities each of which is arranged to use a layer 4 control protocol which facilitates multi-homing by allowing a entity to include more than one IP address in a layer 4 packet chunk, and each of which comprises a memory for maintaining a table mapping one or more private addresses of the entity to one or more public addresses of a Network Address Translation function, each entity being further arranged, for each association initiation message generated by an entity, to include in said layer 4 packet chunk of the message the public IP address or public IP addresses of the Network Address Translation function obtained from said table for the corresponding private IP address or private IP addresses.

13. A node according to claim 12 and comprising a further entity coupled to each of said plurality of entities via a local IP network, the further entity being arranged to implement said Network Address Translation function between the local IP network and a further IP network in which said public IP addresses are valid.

14. A method of configuring a node of a telecommunications system, the node comprising a plurality of entities each arranged to send and receive IP packets to peer entities, via a Network Address Translation function, using a layer 4 control protocol which facilitates multi-homing by allowing an entity to include more than one IP address in a layer 4 packet chunk, the method comprising:
for each entity, sending from the entity to a Network Address Translation function a mapping between the private IP addresses of the entity and ranges of layer 4 association identification tags, receiving from said Network Address Translation function in response, a mapping between said private IP addresses and public IP addresses of the Network Address Translation function, and storing the received mappings for subsequently including in said layer 4 packet chunk, for each association initiation message generated by an entity, the public IP address of the Network Address Translation function obtained from said mapping for the corresponding private IP address.

15. A method according to claim 14, wherein said Network Address Translation function is implemented within the node, the method further comprising, upon receipt of the mapping between the private IP addresses of an entity and ranges of layer 4 association identification tags, constructing said mapping between said private IP addresses and public IP addresses of the Network Address Translation function and sending this to the corresponding entity.

## Patentansprüche

1. Verfahren zum Betreiben eines privaten Netzwerks innerhalb eines Telekommunikationssystems, wobei das Netzwerk eine Mehrzahl von Instanzen umfasst, die jeweils so ausgelegt sind, dass sie IP-Pakete über eine Netzadressumsetzungsfunktion unter Verwendung eines Schicht-4-Steuerprotokolls, das Multihoming ermöglicht, indem es einer Instanz erlaubt, mehr als eine IP-Adresse in eine Schicht-4-Paketinformations-einheit aufzunehmen, an Partner-Instanzen senden und empfangen, wobei das Verfahren umfasst:
Unterhalten an jeder der Mehrzahl von Instanzen einer Tabelle, die eine oder mehrere private Adressen der Instanz einer oder mehreren öffentlichen Adressen der Netzadressumsetzungsfunktion zuordnet;
Aufnehmen durch die Instanz in die Schicht-4-Paketin-formationseinheit der Nachricht für jede Verbindungseinleitungsnachricht, die von einer Instanz erzeugt wird, der öffentlichen IP-Adresse oder öffentlichen IP-Adressen der Netzadressumsetzungsfunktion, die aus der Tabelle für die entsprechende private IP-Adresse oder entsprechenden privaten IP-Adressen erhalten werden.

2. Verfahren nach Anspruch 1, wobei es sich bei dem Schicht-4-Steuerprotokoll um das Stromsteuerungs-Übertragungsprotokoll handelt.

3. Verfahren nach Anspruch 2, wobei es sich bei den Verbindungseinleitungsnachrichten um Stromsteuerungs-Übertragungsprotokollnachrichten handelt, die eine INIT- oder INIT ACK-Informationseinheit enthalten.

4. Verfahren nach einem der Ansprüche 1 bis 3, wobei die Mehrzahl von Instanzen innerhalb desselben physikalischen Knotens enthalten ist.

5. Verfahren nach Anspruch 4 und umfassend ein Implementieren der Netzadressumsetzungsfunktion an einer Netzadressumsetzungsinstanz innerhalb des Knotens.

6. Verfahren nach Anspruch 5, wobei die Netzadressumsetzungsfunktion das Schicht-4-Paket nicht ändert.

7. Verfahren nach Anspruch 5 oder 6 und umfassend ein Unterhalten einer Netzadressumsetzungs-Bindungstabelle an der Netzadressumsetzungsinstanz für jede der Mehrzahl von Instanzen, wobei jede Tabelle die oder jede private Adresse einer Instanz einer öffentlichen Adresse der Netzadressumsetzungsfunktion und einem Bereich von Verbindungsidentifikations-Tags zuordnet.

8. Verfahren nach Anspruch 7, wenn an Anspruch 2 angehängt, wobei es sich bei den Verbindungsidentifikations-Tags um Verifizierungs-Tags handelt.

9. Verfahren nach Anspruch 7 oder 8 und umfassend für jedes abgehende IP-Paket an der Netzadressumsetzungsinstanz ein Zuordnen der privaten Adresse, die im Ursprungsadressfeld des IP-Paketkopfs enthalten ist, zu einer öffentlichen IP-Adresse unter Verwendung der entsprechenden Bindungstabelle und Ersetzen der privaten IP-Adresse durch die öffentliche IP-Adresse.

10. Verfahren nach einem der Ansprüche 7 bis 9 und umfassend für eingehende IP-Pakete an der Netzadressumsetzungsinstanz ein Zuordnen der öffentlichen IP-Adresse, die im Zielfeld des IP-Paketkopfs enthalten ist, und eines Verbindungsidentifikations-Tags, das im Schicht-4-Kopf enthalten ist, zu einer privaten IP-Adresse unter Verwendung der entsprechenden Bindungstabelle und Ersetzen der öffentlichen IP-Adresse durch die die private IP-Adresse.

11. Verfahren nach einem der vorhergehenden Ansprüche, wobei jeder der Mehrzahl von Instanzen eine Mehrzahl von privaten IP-Adressen zugewiesen wird, die innerhalb einer lokalen Domäne des Knotens eindeutig sind, und die öffentlichen IP-Adressen zwischen den Adressen als Pool gemeinsam benutzt werden.

12. Knoten zur Verwendung in einem Telekommunikationsnetzwerk, wobei der Knoten umfasst:
eine Mehrzahl von Instanzen, die jeweils so ausgelegt sind, dass sie ein Schicht-4-Steuerprotokoll verwenden, das Multihoming ermöglicht, indem es einer Instanz erlaubt, mehr als eine IP-Adresse in eine Schicht-4-Paketinformationseinheit aufzunehmen, und die jeweils einen Speicher zum Unterhalten einer Tabelle umfassen, die eine oder mehrere private Adressen der Instanz einer oder mehreren öffentlichen Adressen einer Netzadressumsetzungsfunktion zuordnet, wobei jede Instanz ferner so ausgelegt ist, dass sie für jede Verbindungseinleitungsnachricht, die von einer Instanz erzeugt wird, in die Schicht-4-Paketinfor-mationseinheit der Nachricht die öffentliche IP-Adresse oder öffentlichen IP-Adressen der Netzadressumsetzungsfunktion aufnimmt, die aus der Tabelle für die entsprechende private IP-Adresse oder entsprechenden privaten IP-Adressen erhalten werden.

13. Knoten nach Anspruch 12 und umfassend eine weitere Instanz, die über eine lokales IP-Netzwerk an jede der Mehrzahl von Instanzen gekoppelt ist, wobei die weitere Instanz so ausgelegt ist, dass sie die Netzadressumsetzungsfunktion zwischen dem lokalen IP-Netzwerk und einem weiteren IP-Netzwerk implementiert, in welchem die öffentlichen IP-Adressen gültig sind.

14. Verfahren zum Konfigurieren eines Knotens eines Telekommunikationssystems, wobei der Knoten eine Mehrzahl von Instanzen umfasst, die jeweils so ausgelegt sind, dass sie IP-Pakete über eine Netzadressumsetzungsfunktion unter Verwendung eines Schicht-4-Steuerproto-kolls, das Multihoming ermöglicht, indem es einer Instanz erlaubt, mehr als eine IP-Adresse in eine Schicht-4-Paketinformationseinheit aufzunehmen, an Partner-Instanzen senden und empfangen, wobei das Verfahren umfasst:
Senden für jede Instanz von der Instanz an eine Netzadressumsetzungsfunktion einer Zuordnung zwischen den privaten IP-Adressen der Instanz und Bereichen von Schicht-4-Verbindungsindetifikations-Tags, Empfangen als Antwort von der Netzadressumsetzungsfunktion einer Zuordnung zwischen den privaten IP-Adressen und öffentlichen IP-Adressen der Netzadressumsetzungsfunktion und Speichern der empfangenen Zuordnungen zum anschließenden Aufnehmen in die Schicht-4-Paketin-formationseinheit für jede Verbindungseinleitungsnachricht, die von einer Instanz erzeugt wird, der öffentlichen IP-Adresse der Netzadressumsetzungsfunktion, die aus der Zuordnung für die entsprechende private IP-Adresse erhalten wird.

15. Verfahren nach Anspruch 14, wobei die Netzadressumsetzungsfunktion innerhalb des Knotens implementiert ist, und das Verfahren ferner ein Erstellen bei Empfang der Zuordnung zwischen den privaten IP-Adressen einer Instanz und Bereichen von Schicht-4-Identifikations-Tags der Zuordnung zwischen den privaten IP-Adressen und öffentlichen IP-Adressen der Netzadressumsetzungsfunktion und Senden derselben an die entsprechende Instanz umfasst.

## Revendications

1. Procédé de fonctionnement d'un réseau privé à l'intérieur d'un système de télécommunications, le réseau comprenant une pluralité d'entités chacune agencées afin d'envoyer et recevoir des paquets IP à des entités paires, via une fonction de Traduction d'Adresse de Réseau, en utilisant un protocole de commande de couche 4 qui facilite un rattachement multiple (« multi-homing ») en permettant à une entité d'inclure plus d'une adresse IP dans un segment de paquet de couche 4, le procédé comprenant les étapes consistant à :
conserver au niveau de chacune de ladite pluralité d'entités une table mettant en correspondance une ou plusieurs adresses privées de l'entité avec une ou plusieurs adresses publiques de la fonction de Traduction d'Adresse de Réseau ;
pour chaque message d'amorce d'association généré par une entité, l'entité incluant dans ledit segment de paquet de couche 4 du message l'adresse IP publique ou les adresses IP publiques de la fonction de Traduction d'Adresse de Réseau obtenues d'après ladite table pour l'adresse IP privée ou les adresses IP privées correspondantes.

2. Procédé selon la revendication 1, dans lequel ledit protocole de commande de couche 4 est le SCTP (Stream Control Transmission Protocol).

3. Procédé selon la revendication 2, dans lequel lesdits messages d'amorce d'association sont des messages de protocole STCP contenant un segment INIT ou INIT ACK.

4. Procédé selon une quelconque des revendications 1 à 3, dans lequel ladite pluralité d'entités sont contenues à l'intérieur du même noeud physique.

5. Procédé selon la revendication 4 et comprenant d'implémenter ladite fonction de Traduction d'Adresse de Réseau comme une entité de Traduction d'Adresse de Réseau à l'intérieur dudit noeud.

6. Procédé selon la revendication 5, dans lequel ladite fonction de Traduction d'Adresse de Réseau ne modifie pas le paquet de couche 4.

7. Procédé selon la revendication 5 ou 6 et comprenant de conserver une table d'associations de Traduction d'Adresse de Réseau au niveau de l'entité de Traduction d'Adresse de Réseau pour chacune de ladite pluralité d'entités, chaque table mettant en correspondance la ou chaque adresse privée d'une entité avec une adresse publique de la fonction de Traduction d'Adresse de Réseau et une plage de marqueurs d'identification d'association.

8. Procédé selon la revendication 7, quand elle est annexée à la revendication 2, lesdits marqueurs d'identification d'association étant des marqueurs de vérification.

9. Procédé selon la revendication 7 ou 8 et comprenant, pour chaque paquet IP sortant au niveau de l'entité de Traduction d'Adresse de Réseau, de mettre en correspondance l'adresse privée contenue dans le champ d'adresse source de l'en-tête de paquet IP avec une adresse IP publique en utilisant la table d'associations correspondante, et de substituer l'adresse IP privée à l'adresse IP publique.

10. Procédé selon une quelconque des revendications 7 à 9 et comprenant, pour les paquets IP entrants au niveau de l'entité de Traduction d'Adresse de Réseau, de mettre en correspondance l'adresse IP publique contenue dans le champ de destination de l'en-tête de paquet IP et un marqueur d'identification d'association contenu dans l'en-tête de couche 4 avec une adresse IP privée en utilisant la table d'associations correspondante, et de substituer l'adresse IP publique à l'adresse IP privée.

11. Procédé selon une quelconque des revendications précédentes, dans lequel chacune de ladite pluralité d'entités se voit allouer une pluralité d'adresses IP privées qui sont uniques à l'intérieur d'un domaine local du noeud, et lesdites adresses IP publiques sont partagées entre les adresses comme un groupe.

12. Noeud à utiliser dans un réseau d etélécommunication, le noeud comprenant :
une pluralité d'entités dont chacune est agencée afin d'utiliser un protocole de commande de couche 4 qui facilite un rattachement multiple en permettant à une entité d'inclure plus d'une adresse IP dans un segment de paquet de couche 4, et dont chacune comprend une mémoire pour conserver une table mettant en correspondance une ou plusieurs adresses privées de l'entité avec une ou plusieurs adresses publiques d'une fonction de Traduction d'Adresse de Réseau, chaque entité étant en outre agencée, pour chaque message d'amorce d'association généré par une entité, afin d'inclure dans ledit segment de paquet de couche 4 du message l'adresse IP publique ou les adresses IP publiques de la fonction de Traduction d'Adresse de Réseau obtenues d'après ladite table pour l'adresse IP privée ou les adresses IP privées correspondantes.

13. Noeud selon la revendication 12 et comprenant une entité supplémentaire couplée à chacune de ladite pluralité d'entités via un réseau IP local, l'entité supplémentaire étant agencée afin d'implémenter ladite fonction de Traduction d'Adresse de Réseau entre le réseau IP local et un réseau IP supplémentaire dans lequel lesdites adresses IP publiques sont valides.

14. Procédé de configuration d'un noeud d'un système de télécommunication, le noeud comprenant une pluralité d'entités étant chacune agencées afin d'envoyer et recevoir des paquets IP à des entités paires, via une fonction de Traduction d'Adresse de Réseau, en utilisant un protocole de commande de couche 4 qui facilite un rattachement multiple en permettant à une entité d'inclure plus d'une adresse IP dans un segment de paquet de couche 4, le procédé comprenant les étapes consistant à:
pour chaque entité, envoyer depuis l'entité vers une fonction de Traduction d'Adresse de Réseau une mise en correspondance entre les adresses IP privées de l'entité et des plages de marqueurs d'identification d'association de couche 4, recevoir depuis ladite Fonction de Traduction d'Adresse de réseau en réponse, une mise en correspondance entre lesdites adresses IP privées et adresses IP publiques de la fonction de Traduction d'Adresse de Réseau, et mémoriser les mises en correspondance reçues pour ensuite inclure dans ledit segment de paquet de couche 4, pour chaque message d'amorce d'association généré par une entité, l'adresse IP publique de la fonction de Traduction d'Adresse de Réseau obtenue d'après ladite mise en correspondance pour l'adresse IP privée correspondante.

15. Procédé selon la revendication 14, dans lequel ladite fonction de traduction d'adresse de réseau est implémentée à l'intérieur du noeud, le procédé comprenant en outre, à la réception de la mise en correspondance entre les adresses IP privées d'une entité et les plages de marqueurs d'identification d'association de couche 4, de construire ladite mise en correspondance entre lesdites adresses IP privées et les adresses IP publiques de la fonction de Traduction d'Adresse de Réseau et d'envoyer celle-ci à l'entité correspondante.
